# EUROPÄISCHE PATENTSCHRIFT

(11) **EP 3 652 097 B1**
(45) Veröffentlichungstag und Bekanntmachung des Hinweises auf die Patenterteilung: **03.04.2024**
(21) Anmeldenummer: 18742771.1
(22) Anmeldetag: 16.07.2018
(51) Int. Cl.: B65G 47/51

(54) **FÖRDERSPEICHERVORRICHTUNG UND VERFAHREN DAZU**
CONVEYING STORAGE DEVICE AND CORRESPONDING METHOD
DISPOSITIF DE TRANSPORT ET DE STOCKAGE ET PROCÉDÉ ASSOCIÉ

(30) Priorität: 14.07.2017 DE 102017212125
(43) Veröffentlichungstag der Anmeldung: 20.05.2020
(73) Patentinhaber: Krones AG, 93073 Neutraubling (DE)
(72) Erfinder: WINZINGER, Frank, 93073 Neutraubling (DE); SENN, Konrad, 93073 Neutraubling (DE); BINDER, Arthur, 93073 Neutraubling (DE); HUETTNER, Johann, 93073 Neutraubling (DE)
(74) Vertreter: Grünecker Patent- und Rechtsanwälte PartG mbB
(86) Internationale Anmeldenummer: PCT/EP2018/069268
(87) Internationale Veröffentlichungsnummer: WO 2019/012155

(56) Entgegenhaltungen:
- EP-A1- 1 348 345
- WO-A1-02/32797
- WO-A1-2011/019291
- DE-U1- 20 221 468
- JP-A- S59 149 225
- US-A- 3 110 383

## Beschreibung

Die Erfindung betrifft eine Förderspeichervorrichtung gemäß dem Oberbegriff des Anspruchs 1 und ein Verfahren gemäß Anspruch 6.

### Stand der Technik

In Behälterbehandlungslinien, in denen Behälter im Allgemeinen mehrere Behandlungsstationen durchlaufen, können die Behandlungsstationen die Behälter mit einem unterschiedlichen Durchsatz pro Stunde behandeln und bei Störungen in einer oder mehrerer der Behandlungsstationen kann es zu einem Rückstau von Behältern kommen. Um einen Stopp der Behälterbehandlungsmaschine zu vermeiden, sind ein oder mehrere Stautische in der Behälterbehandlungsmaschine vorgesehen, die als Puffer, d.h. als Zwischenspeicher, für die Behälter dienen. Auf dem Stautisch/den Stautischen werden die sich ansammelnden Behälter so lange gespeichert, bis sie mittels eines Abförderers beispielsweise einreihig und lückenlos oder alternativ im Massentransport wieder dem Prozess/den Prozessen der Behälterbehandlungsmaschine zugeführt werden.

Beim Leerfahren eines Zwischenspeichers kann es vorkommen, dass im Bereich zwischen dem Zuförderer und dem Abförderer Behälter stehen bleiben. Damit diese bei einem neuen Prozessablauf in der Behälterbehandlungsmaschine nicht in den Prozess mit eingeführt werden, ist es erforderlich, diese Behälter aus dem Bereich zu entfernen, damit sie mittels des Abförderers aus dem Zwischenspeicher abgefördert werden.

WO 02/32797 A1 offenbart eine Vorrichtung mit einem ersten Förderer, der in eine erste Richtung angetrieben wird, und einem zweiten Förderer, der parallel in eine zweite, entgegengesetzte Richtung angetrieben wird, wobei die Förderer nebeneinander angeordnet sind. Ein bewegliches Transportelement ist im Raum zwischen den beiden Förderern angeordnet und bildet eine Brücke, die sich über den Raum erstreckt. Das Transportelement ist antriebsmäßig mit den Förderern verbunden, so dass es sich zwischen den Förderern in Abhängigkeit von der Geschwindigkeitsdifferenz der Förderer bewegen kann.

JP S59 149225 A offenbart eine Vorrichtung zum Transport von Früchten, die auf einem ersten Förderband in eine erste Richtung transportiert werden, dort auf eine schräg zur ersten Richtung angeordnete, sich drehende Walze treffen, wodurch die Früchte zu einer Lücke zwischen dem ersten Förderband und einem zweiten Förderband gelangen, unter der eine Aufnahmerahmen angeordnet ist. Mit einem Abstand ist oberhalb des Aufnahmerahmens kann eine sich drehende Bürstenrolle angeordnet sein, mittels der die Früchte unter der drehenden Bürstenrolle hindurch, vom Aufnahmerahmen zum zweiten Förderband überführt und dort in eine zweite Richtung transportiert werden oder in der Lücke zwischen den beiden Transportbändern können ein Aufnahmerahmen und eine sich drehende Rolle angeordnet sein, wobei die sich drehende Rolle so tief angeordnet ist, dass die Früchte über sie hinweg von dem ersten auf das zweite Förderband überführt werden.

US 2012/0132503 A1 offenbart einen ebenen Sammeltisch zum Sammeln von Waren in einer Förderanlage, der zwei ebene parallele Förderbänder, Eingangs- und Ausgangsförderband, umfasst, die nebeneinander angeordnet sind und in entgegengesetzte Richtungen angetrieben werden und zwischen denen ein Zwischenförderband angeordnet ist. Der Sammeltisch umfasst am stromabwärts gelegenen Ende eine Ablenkvorrichtung, die fest mit einem Rahmen des Tisches verbunden ist, und am stromaufwärts gelegenen Ende einen Abweiser, der oberhalb einer Teilungsvorrichtung des Zwischenförderbands angeordnet ist. Bei einer Leerung des Sammeltischs werden Behälter, die sich auf dem Zwischenförderband befinden, durch die Bewegung des Zwischenförderbandes und der Ablenkvorrichtung in Zusammenwirkung mit dem Abweiser von dem Zwischenförderband auf das Ausgangsförderband transferiert.

EP 1326793 offenbart eine Vorrichtung zum Steuern des Flusses von Gütern mit einem Güterschubelement, das Güter auf einer ersten Fördervorrichtung in antreibender Weise zu einer zweiten Fördervorrichtung hin schiebt, wobei sich das Güterschubelement mindestens über die erste Fördervorrichtung hinweg erstreckt. Das Güterüberführungselement ist drehbar mit einem Transportelement verbunden, wobei dies ermöglicht, dass das Güterüberführungselement geeignet arbeitet, wenn sich dieses entlang der Fördervorrichtungen bewegt. Weiter umfasst die Vorrichtung ein zweites Güterüberführungselement, das in Entfernung von dem ersten Güterüberführungselement angeordnet ist, wobei das zweite Güterüberführungselement zwischen den beiden Fördervorrichtungen angeordnet ist und ein zweites Güterschubelement umfasst, das die Güter von der ersten zur zweiten Fördervorrichtung umlenkt. Das zweite Güterschubelement kann ein Laufband umfassen, das durch ein Antriebsrad angetrieben wird.

Beim Leerfahren des Sammeltisches/der Vorrichtung könnte es passieren, dass falls die Ablenkvorrichtung/das erste Güterüberführungselement auf die Teilungsvorrichtung/das zweite Güterüberführungselement zu gefahren wird, die Gefahr des Einquetschens von Händen des Bedienpersonals besteht.

### Aufgabe

Die Aufgabe der Erfindung besteht darin, eine Förderspeichervorrichtung und ein Verfahren zum Betreiben der Förderspeichervorrichtung zur Verfügung zu stellen, die beim Leerfahren ein zuverlässiges und für Bedienpersonal sicheres Entfernen aller Behälter aus der Förderspeichervorrichtung ermöglicht, wobei das Leerfahren zudem inhärent sicher (also "eigensicher") ausführbar ist.

### Lösung

Diese Aufgabe wird erfindungsgemäß durch die Förderspeichervorrichtung nach Anspruch 1 und das Verfahren nach Anspruch 6 gelöst. Bevorzugte Ausführungsformen und vorteilhafte Weiterbildungen sind in den Unteransprüchen offenbart.

Die erfindungsgemäße Förderspeichervorrichtung für Behälter, wie Flaschen oder Dosen, umfasst einen in eine erste Richtung antreibbaren ersten Förderer und einen in eine zweite Richtung antreibbaren zweiten Förderer, wobei die erste Richtung und die zweite Richtung gegenläufig sind wobei der erste Förderer und der zweite Förderer derart parallel zueinander angeordnet sind, dass Behälter von einer ersten Förderoberfläche des ersten Förderers zu einer zweiten Förderoberfläche des zweiten Förderers überführbar sind.

Zudem umfasst die Förderspeichervorrichtung eine Überführungsvorrichtung zum Überführen von Behältern von der ersten Förderoberfläche zu der zweiten Förderoberfläche und ein Zusatzelement.

Entlang eines Übergangbereichs zwischen der ersten Förderoberfläche und der zweiten Förderoberfläche zwischen der Überführungsvorrichtung und dem Trennelement besteht ein Durchgangsbereich. Die Überführungsvorrichtung ist während eines Leerungsprozesses der Förderspeichervorrichtung in eine Leerungsposition verbringbar.

Um Behälter aus dem Durchgangsbereich zuverlässig und für Bedienpersonal sicher zu entfernen und ein inhärent sicheres Leerfahren zu ermöglichen, ist das Zusatzelement vorgesehen.

Das Zusatzelement kann einen Antrieb umfassen, mittels welchem das Zusatzelement bewegbar ist, insbesondere schwenkbar ist, oder, nicht erfindungsgemäß, linear verfahrbar oder drehbar ist. Ist das Zusatzelement an der Überführungsvorrichtung angeordnet und insbesondere mit dieser bewegbar, so ist der Antrieb für das Zusatzelement bevorzugt auch auf dem Überführungselement angeordnet. Umfasst das Überführungselement, in einem nicht erfindungsgemä-ßen Beispiel, einen angetriebenen Riemen zum Überführen der Behälter von der ersten Förderoberfläche auf die zweite Förderoberfläche, so kann der Antrieb des Riemens mit dem Antrieb des Zusatzelements gekoppelt sein, beispielsweise über eine schaltbare Kupplung und/oder eine Kurvenscheibe.

Alternativ und nicht erfindungsgemäß können das Zusatzelement und der Riemen jeweils einen eigenen Antrieb aufweisen, wobei diese Antriebe insbesondere an dem Überführungselement angeordnet sind.

Alternativ und nicht erfindungsgemäß kann der Antrieb für das Zusatzelement an einem stationären Gestell der Vorrichtung angeordnet sein und das an dem Überführungselement angeordnete Zusatzelement beispielsweise über einen feststehenden Nocken im Vorbeifahren des Überführungselements betätigen, insbesondere in einer Position, in welcher ein minimaler Abstand zwischen Trennelement und Überführungselement gegeben ist.

Das Zusatzelement ist derart ausgebildet, dass es während des Leerungsprozesses relativ beweglich gegenüber der Überführungsvorrichtung ist. Das Zusatzelement ist während des Leerungsprozesses in den Durchgangsbereich einbringbar, oder ist nicht erfindungsgemäß in dem Durchgangsbereich angeordnet, und dazu ausgelegt, Behälter zu dem zweiten Förderer zu verbringen. Durch das in den Durchgangsbereich einbringbare Zusatzelement ist im Allgemeinen keine Interaktion durch Bedienpersonal zum Entfernen von Behältern in dem Durchgangsbereich erforderlich. So ist ein inhärent sicheres Leerfahren der Förderspeichervorrichtung möglich.

Die nicht erfindungsgemäße Förderspeichervorrichtung kann weiter einen wahlweise in die erste Richtung oder in die zweite Richtung antreibbaren oder stillstehenden dritten Förderer umfassen, der zwischen dem ersten Förderer und dem zweiten Förderer angeordnet ist, wobei der erste Förderer, der zweite Förderer und der dritte Förderer derart parallel zueinander angeordnet sind, dass Behälter von der ersten Förderoberfläche des ersten Förderers zu einer dritten Förderoberfläche des dritten Förderers und von dort zu der zweiten Förderoberfläche des zweiten Förderers überführbar sind.

Hierbei besteht der nicht erfindungsgemäße Durchgangsbereich entlang der dritten Förderoberfläche zwischen der Überführungsvorrichtung und dem Trennelement. Das nicht erfindungsgemäße Zusatzelement ist dazu ausgelegt, Behälter von dem dritten Förderer zu dem zweiten Förderer zu verbringen.

Die Überführungsvorrichtung ist während eines Leerungsprozesses der Förderspeichervorrichtung in eine Leerungsposition verbringbar. Dazu kann die Überführungsvorrichtung jeweils seitlich neben der Förderspeichervorrichtung, d.h. einmal neben dem ersten Förderer und einmal neben dem zweiten Förderer, gelagert sein und mittels der Lagerung verfahrbar sein. Ist nicht erfindungsgemäß ein dritter Förderer vorhanden, so kann der dritte Förderer in diesem Fall stillstehen. In einem Leerungsprozess kann die Lagerung in die zweite Richtung verfahren werden. Alternativ kann vorgesehen sein, dass die Überführungsvorrichtung an dem dritten Förderer angeordnet ist und mittels des dritten Förderers während eines Leerungsprozesses in die zweite Richtung verfahren wird.

Das nicht erfindungsgemäße Zusatzelement kann von einem Trennelement umfasst werden, wobei vorzugsweise das Zusatzelement derart ausgebildet ist, dass es während eines Leerungsprozesses beweglich gegenüber dem Trennelement ist.

Das nicht erfindungsgemäße Zusatzelement kann eine elastische Halterung umfassen und mittels der Halterung verriegelbar sein, wobei vorzugsweise das Zusatzelement oder ein Teil davon zumindest teilweise aus einem federnden Material besteht oder federnd gelagert ist, wobei vorzugsweise das Zusatzelement oder ein Teil davon zumindest teilweise bei Kontakt mit Behältern oder bei Kontakt mit der Überführungsvorrichtung in einer Richtung der von den Behältern oder der Überführungsvorrichtung auf das Zusatzelement oder den Teil davon ausgeübten Kraft bewegt wird.

Da sich das nicht erfindungsgemäße Zusatzelement dem Druck der Behälter nachgebend bewegt, ist eine mögliche Kraft entsprechend gering und ein Bediener erleidet keine Verletzung, wenn er ein Körperteil zwischen die Überführungsvorrichtung und das Zusatzelement einbringt.

Durch die Verriegelung des nicht erfindungsgemäßen Zusatzelements mittels einer elastischen Halterung ist, falls eine Interaktion durch das Bedienpersonal stattfindet, seine Sicherheit gewährleistet, da beispielsweise ein Einklemmen der Hand zwischen Zusatzelement und Überführungsvorrichtung durch die elastische Halterung nicht passieren kann.

Die Überführungsvorrichtung kann jeweils seitlich neben der Förderspeichervorrichtung gelagert und mittels der Lagerung verfahrbar sein.

Alternativ und nicht erfindungsgemäß können die Überführungsvorrichtung und das Trennelement an dem dritten Förderer angeordnet und mittels diesem entsprechend in die erste Richtung oder in die zweite Richtung bewegbar sein, wobei entlang der dritten Förderoberfläche zwischen der Überführungsvorrichtung und dem Trennelement ein Durchgangsbereich mit konstantem Abstand bestehen kann.

Ein in der zweiten Richtung liegender Endbereich des nicht erfindungsgemäßen Trennelements kann eine Abschrägung aufweisen, wobei vorzugsweise das Trennelement mittels eines Führungselements geführt wird und wobei vorzugsweise das Führungselement an einem in die erste Richtung liegenden Endbereich eine Abschrägung umfasst. Durch die Abschrägung des Endbereichs des Trennelements kann die Sicherheit des Bedienpersonals weiter erhöht werden, da bei einer Bewegung des Trennelements in die zweite Richtung eine Hand nicht, wie beispielsweise bei einem geraden Endbereich, eingeklemmt wird, sondern beispielsweise nach oben weg gedrängt wird.

Das nicht erfindungsgemäße Zusatzelement kann eine nicht erfindungsgemäße Hülle umfassen, die das nicht erfindungsgemäße Trennelement zumindest teilweise umgibt und die auf dem Trennelement verfahrbar gelagert ist, wobei die Hülle formstabil ausgebildet sein kann. Die Hülle kann in einem in der ersten Richtung und in einem in der zweiten Richtung liegenden Endbereich jeweils offen sein, so dass sie auf dem Trennelement verfahrbar ist, und das Trennelement durch diese beiden offenen Bereiche der Hülle hindurch bewegt werden kann.

Durch die Formstabilität der Hülle können beim Leerfahren im Durchgangsbereich befindliche Behälter auf die zweite Förderoberfläche verbracht werden.

Vorzugsweise weist der in der ersten Richtung liegende Endbereich der nicht erfindungsgemä-ßen Hülle eine Stirnfläche auf, die senkrecht zu der dritten Förderoberfläche verläuft und mit der ersten Richtung einen Winkel bildet, wobei vorzugsweise die Hülle mittels des nicht erfindungsgemäßen Führungselements führbar ist. Eine derart ausgebildete Stirnfläche kann in vorteilhafterweise beim Leerfahren im Durchgangsbereich befindliche Behälter auf die zweite Förderoberfläche verbringen.

Die nicht erfindungsgemäße Hülle kann einen nicht erfindungsgemäßen Betätiger mit einem Magneten und einem nicht erfindungsgemäßen Winkelelement umfassen, der auf der nicht erfindungsgemäßen Hülle angeordnet sein kann. Vorzugsweise ist der Betätiger durch einen Pneumatikzylinder/Linearmotor und ein weiteres Winkelelement verriegelbar ausgebildet, so dass bei einem Verriegeln des Betätigers die Hülle auf dem Trennelement entlang der dritten Förderoberfläche ausfahrbar ist. Beispielsweise können der nicht erfindungsgemäße Pneumatikzylinder und das weitere nicht erfindungsgemäße Winkelelement unterhalb der Hülle angeordnet sein, so dass bei einer Bewegung des Pneumatikzylinders/Linearmotors und des Winkelelements die Gefahr stark reduziert ist, dass Bedienpersonal während der Bewegung verletzt wird.

In einem anderen nicht erfindungsgemäßen Beispiel kann das nicht erfindungsgemäße Zusatzelement als ein nicht erfindungsgemäßer Hebel ausgebildet sein, der, wenn die Überführungsvorrichtung und das Trennelement in die Leerungsposition verbracht wurden, in den Durchgangsbereich einbringbar sein kann und der dazu ausgelegt sein kann, dabei Behälter in dem Durchgangsbereich seitlich von der dritten Förderoberfläche abzuräumen. Vorzugsweise ist der Hebel mittels eines Pneumatikzylinders/Linearmotors ansteuerbar ausgebildet. Der Hebel kann während eines Speicher- und Förderprozesses der Förderspeichervorrichtung oberhalb dieser Vorrichtung angeordnet sein, so dass er den Betrieb dieser Vorrichtung nicht beeinflusst.

In einem weiteren nicht erfindungsgemäßen Beispiel kann das nicht erfindungsgemäße Zusatzelement einen ersten nicht erfindungsgemäßen Klotz, einen zweiten nicht erfindungsgemäßen Klotz und mindestens eine nicht erfindungsgemäße Feder umfassen, wobei der erste Klotz gefedert mittels der mindestens einer Feder mit dem zweiten Klotz verbunden sein kann und wobei das Trennelement durch den ersten Klotz und durch den zweiten Klotz verlaufen kann. Vorzugsweise ist der erste Klotz in der ersten Richtung gesehen vor dem zweiten Klotz angeordnet. Während eines Speicher- und Förderprozesses der nicht erfindungsgemäßen Förderspeichervorrichtung überragt das Trennelement in der ersten Richtung gesehen das Zusatzelement. Während eines Leerfahrens wird das Zusatzelement bezüglich des Trennelements in die erste Richtung bewegt, so dass mittels des ersten Klotzes Behälter, die in dem Durchgangsbereich angeordnet sind, von der dritten Förderoberfläche auf die zweite Förderoberfläche verbracht werden können.

Die mindestens eine nicht erfindungsgemäße Feder kann eine nicht erfindungsgemäße Abdeckung umfassen, wobei vorzugsweise ein in der ersten Richtung liegender Endbereich des ersten Klotzes eine Stirnfläche aufweist, die senkrecht zu der dritten Förderoberfläche verläuft und mit der ersten Richtung einen Winkel bildet. Die Abdeckung kann verhindern, dass Bedienpersonal in den Bereich der mindestens einen Feder greift und dadurch womöglich verletzt werden kann. Die Stirnfläche des ersten Klotzes kann die Sicherheit des Bedienpersonals erhöhen, da zusammen mit der gefederten Lagerung des ersten Klotzes ein Einklemmen einer Hand vermieden werden kann.

In einem weiteren nicht erfindungsgemäßen Beispiel kann das nicht erfindungsgemäße Zusatzelement als eine nicht erfindungsgemäße Stange ausgebildet sein. Das nicht erfindungsgemäße Trennelement kann dann zudem eine Durchgangsbohrung umfassen, in der die Stange fahrbar angeordnet sein kann. Während eines Speicher- und Förderprozesses der Förderspeichervorrichtung ist die Stange vorzugsweise derart in dem Trennelement angeordnet, dass sie den in der ersten Richtung liegenden Endbereich des Trennelements nicht überragt. Für ein Leerfahren der nicht erfindungsgemäßen Förderspeichervorrichtung kann die Stange in die erste Richtung verfahren werden, so dass durch sie in dem Durchgangsbereich vorhandene Behälter von der dritten Förderoberfläche auf die zweite Förderoberfläche überführt werden.

Die nicht erfindungsgemäße Stange kann mit einem Pneumatikzylinder/Linearmotor und einem Winkelelement gefedert gelagert und für ein Verfahren der Stange verriegelbar ausgebildet sein. Sollte Bedienpersonal während des Leerfahrens der nicht erfindungsgemäßen Förderspeichervorrichtung zwischen das Trennelement, respektive die Stange, und die Überführungsvorrichtung in den Durchgangsbereich greifen, so kann eine Hand durch die gefederte Lagerung der Stange nicht eingeklemmt werden.

In einem anderen nicht erfindungsgemäßen Beispiel kann das nicht erfindungsgemäße Zusatzelement als ein nicht erfindungsgemäßes angetriebenes Element ausgebildet sein, wobei vorzugsweise das Zusatzelement an der Überführungsvorrichtung oder an einer von der Überführungsvorrichtung unabhängigen Struktur angeordnet sein kann.

Alternativ kann das nicht erfindungsgemäße Trennelement als nicht erfindungsgemäßes Geländer ausgebildet sein, wobei das nicht erfindungsgemäße Zusatzelement als ein nicht erfindungsgemäßes angetriebenes Element ausgebildet sein kann. Das Zusatzelement kann an dem Geländer, an der Überführungsvorrichtung oder an einer sowohl von dem Geländer als auch von der Überführungsvorrichtung unabhängigen Struktur angeordnet sein. Behälter können mittels des Geländers von der ersten Förderoberfläche zu der zweiten Förderoberfläche geleitet werden. Um beim Leerfahren ein Einklemmen von Händen des Bedienpersonals zwischen nicht erfindungsgemäßem Trennelement und nicht erfindungsgemäßer Überführungsvorrichtung zu vermeiden, kann in dem Durchgangsbereich das Zusatzelement vorgesehen sein.

Das nicht erfindungsgemäße angetriebene Element kann einen eigenen Antrieb umfassen, beispielsweise einen herkömmlichen Antriebsmotor.

Alternativ und nicht erfindungsgemäß kann das angetriebene Element mit einem Antrieb des dritten Förderers gekoppelt sein, wobei vorzugsweise eine nicht erfindungsgemäße Kupplung vorgesehen ist, die in dem Leerungsprozess aktiviert werden kann. Als Antrieb des dritten Förderers kann beispielsweise einen herkömmlichen Antriebsmotor vorgesehen sein.

Das nicht erfindungsgemäße angetriebene Element kann eine Bürste umfassen, wobei die Bürste vorzugsweise drehbar ausgebildet ist und wobei die Bürste vorzugsweise elastische Borsten umfasst. Eine Rotationsrichtung der Bürste kann derart gesteuert werden, dass durch die Rotation der Bürste Behälter beim Leerfahren von der ersten und der dritten Förderoberfläche auf die zweite Förderoberfläche verbracht werden.

Umfasst die Förderspeichervorrichtung keinen dritten Förderer, so ist das Zusatzelement als ein Überleitelement ausgebildet, wobei vorzugsweise das Überleitelement eine gekrümmte Oberfläche aufweist oder wobei das Überleitelement mindestens zwei in einem Winkel von 120° bis 180° zusammengesetzte Einheiten umfasst.

Das Überleitelement ist ausgebildet, Behälter von dem ersten Förderer zu dem zweiten Förderer verbringen. Das Überleitelement ist ausgebildet, wenn bei dem Leerungsprozess ein letzter Behälter auf dem ersten Förderer in dem Durchgangsbereich angeordnet ist, aktiviert zu werden, zur Seite zu schwenken, dabei den letzten Behälter zu kontaktieren und auf den zweiten Förderer zu schieben. Das Überleitelement ist ausgebildet, danach wieder in die Ausgangsposition zurückzuschwenken.

Beispielsweise kann das Überleitelement fingerartig ausgebildet sein. Dabei kann es eine Krümmung aufweisen, die in Richtung der Schwenkbewegung liegt, wenn das Überleitelement aktiviert wird. Es kann auch vorgesehen sein, dass das Überleitelement flächig ausgebildet ist. In der flächigen Ausbildung kann das Überleitelement mindestens zwei in einem Winkel von 120° bis 180° zusammengesetzte Einheiten umfassen.

Diese Förderspeichervorrichtung kann weiter einen Antrieb für das Überleitelement umfassen, wobei vorzugsweise eine Verbindungswelle vorgesehen ist, die den Antrieb und das Überleitelement verbindet, wobei vorzugsweise ein Sensor vorgesehen ist für eine Detektion einer Anwesenheit von einem oder mehreren Behältern in dem Durchgangsbereich, wobei der Sensor vorzugsweise ausgelegt ist, einen Auslösemechanismus des Überleitelements auszulösen, wenn ein oder mehrere Behälter detektiert werden.

Wenn während des Leerungsprozesses ein Behälter auf den ersten Förderer verbleibt, kann dies mittels des Sensors detektiert werden und nachfolgend kann das Überleitelement verschwenkt werden, um den Behälter von dem ersten Förderer auf den zweiten Förderer zu verbringen/zu schieben.

Das Überleitelement kann an der Überführungsvorrichtung angeordnet sein, wobei vorzugsweise der Antrieb, die Verbindungswelle und der Sensor an der Überführungsvorrichtung angeordnet sind.

Die Erfindung betrifft weiterhin Verfahren zum Betreiben einer Förderspeichervorrichtung wie oben oder weiter unten beschrieben während eines Leerungsprozesses.

Ein erstes Verfahren kann die folgenden Schritte umfassen:
- Antreiben des ersten Förderers in die erste Richtung,
- Antreiben des zweiten Förderers in die zweite Richtung,
- Verbringen der Überführungsvorrichtung in die Leerungsposition durch Verfahren in die zweite Richtung,
während des Leerungsprozesses, Detektieren von auf den ersten Förderer verbliebener Behälter und Aktivieren des Zusatzelements, um die verbliebenen Behälter von dem ersten Förderer auf den zweiten Förderer zu verbringen.

Ein alternatives Verfahren kann die folgenden Schritte umfassen:
- Antreiben des ersten Förderers in die erste Richtung,
- Antreiben des zweiten Förderers in die zweite Richtung,
- Antreiben des dritten Förderers in die zweite Richtung oder Nichtantreiben des dritten Förderers,
- Verbringen der Überführungsvorrichtung in die Leerungsposition durch Verfahren in die zweite Richtung,
während des Leerungsprozesses, Transportieren von auf dem dritten Förderer stehenden Behältern in die zweite Richtung, bis sie in Kontakt mit dem Zusatzelement kommen und mittels des Zusatzelements automatisch von dem dritten Förderer auf den zweiten Förderer verbracht werden.

Die beigefügten Figuren stellen beispielhaft zum besseren Verständnis und zur Veranschaulichung Aspekte der Erfindung dar. Es zeigt:
- Figur 1A: ein erstes Beispiel der Förderspeichervorrichtung in einem ersten Betriebszustand,
- Figur 1B: die beispielhafte Förderspeichervorrichtung von Fig. 1A in einem zweiten Betriebszustand,
- Figur 1C: eine Halterung eines Zusatzelements der beispielhaften Förderspeichervorrichtung von Figuren 1A und 1B,
- Figur 2A: ein zweites Beispiel der Förderspeichervorrichtung in einem ersten Betriebszustand,
- Figur 2B: die beispielhafte Förderspeichervorrichtung von Fig. 2A in einem zweiten Betriebszustand,
- Figur 3A: ein drittes Beispiel der Förderspeichervorrichtung in einem ersten Betriebszustand,
- Figur 3B: die beispielhafte Förderspeichervorrichtung von Fig. 3A in einem zweiten Betriebszustand,
- Figur 4A: ein viertes Beispiel einer Förderspeichervorrichtung in einem ersten Betriebszustand,
- Figur 4B: die beispielhafte Förderspeichervorrichtung von Fig. 4A in einem zweiten Betriebszustand,
- Figur 4C: eine beispielhafte Halterung eines Zusatzelements der Förderspeichervorrichtung von Figuren 4A und 4B,
- Figur 5: ein fünftes Beispiel der Förderspeichervorrichtung,
- Figur 6: ein sechstes Beispiel der Förderspeichervorrichtung,
- Figur 7: ein siebtes Beispiel der Förderspeichervorrichtung,
- Figur 8A: eine Ausführungsform der Förderspeichervorrichtung in einem ersten Betriebszustand,
- Figur 8B: eine Ausschnittsvergrößerung der Fig. 8A,
- Figur 8C: die Förderspeichervorrichtung von Fig. 8A in einem zweiten Betriebszustand,
- Figur 8D: die Förderspeichervorrichtung von Fig. 8A in einem dritten Betriebszustand und
- Figur 8E: die Förderspeichervorrichtung von Fig. 8A in einem vierten Betriebszustand.

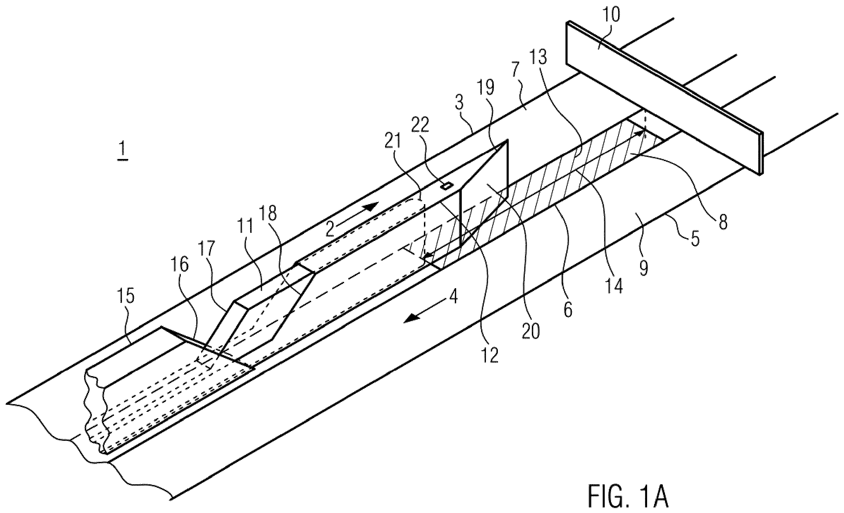

Die grundlegenden Bestandteile der in den Figuren 1A bis 7 beschriebenen, beispielhaften Förderspeichervorrichtungen sind gleich aufgebaut und werden hier deshalb zusammenfassend beschrieben. Die in den Figuren 1A bis 7 beschriebenen Förderspeichervorrichtungen 1, 26, 36, 45, 57, 72, 73 für Behälter 63 umfassen jeweils einen in eine erste Richtung 2, 58 antreibbaren ersten Förderer 3, 59 und einen in eine zweite Richtung 4, 60 antreibbaren zweiten Förderer 5, 61, wobei die erste Richtung 2, 58 und die zweite Richtung 4, 60 gegenläufig sind.

Des Weiteren umfassen die ersten bis siebten Beispiele der Förderspeichervorrichtungen 1, 26, 36, 45, 57, 72, 73 jeweils einen wahlweise in die erste Richtung 2, 58 oder in die zweite Richtung 4, 60 antreibbaren dritten Förderer 6, 62, wobei der erste Förderer 3, 59, der zweite Förderer 5, 61 und der dritte Förderer 6, 62 derart parallel zueinander angeordnet sind, dass Behälter 63 von einer ersten Förderoberfläche 7, 64 des ersten Förderers 3, 59 zu einer dritten Förderoberfläche 8, 65 des dritten Förderers 6, 62 von dort und zu einer zweiten Förderoberfläche 9, 66 des zweiten Förderers 5, 61 überführbar sind.

Zudem umfassen diese Förderspeichervorrichtungen 1, 26, 36, 45, 57, 72, 73 jeweils eine Überführungsvorrichtung 10, 67 zum Überführen von Behältern 63 von der ersten Förderoberfläche 7, 64 zu der dritten Förderoberfläche 8, 65 und von dort zu der zweiten Förderoberfläche 9, 66 und ein Trennelement 11, 29, 42, 47, 68 mit einem Zusatzelement 12, 27, 37, 46, 69.

Die Überführungsvorrichtung 10, 67 und das Trennelement 11, 29, 42, 47, 68 sind an dem dritten Förderer 6, 62 angeordnet und mittels diesem entsprechend in die erste Richtung 2, 58 oder in die zweite Richtung 4, 60 bewegbar, wobei entlang der dritten Förderoberfläche 8, 65 zwischen der Überführungsvorrichtung 10, 67 und dem Trennelement 11, 29, 42, 47, 68 ein Durchgangsbereich 13, 30, 44, 53 mit konstantem Abstand 14, 35 besteht, wobei die Überführungsvorrichtung 10, 67 und das Trennelement 11, 29, 42, 47, 68 während eines Leerungsprozesses der Förderspeichervorrichtung 1, 26, 36, 45, 57, 72, 73 in eine Leerungsposition verbringbar sind.

Das Trennelement 11, 29, 42, 47, 68 und das Zusatzelement 12, 27, 37, 46, 69 sowie eine elastische Halterung des Zusatzelements 12, 27, 37, 46, 69 können in den verschiedenen Beispielen der Förderspeichervorrichtung 1, 26, 36, 45, 57, 72, 73 verschiedenenartig ausgebildet sein.

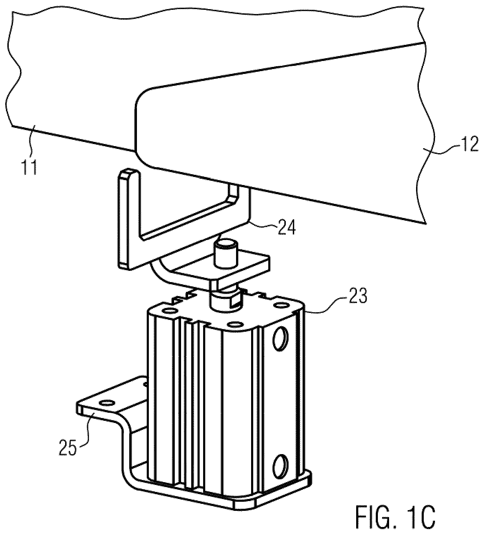

Figur 1A zeigt ein erstes Beispiel der Förderspeichervorrichtung 1 in einem ersten Betriebszustand. Das Zusatzelement 12 umfasst eine Hülle 12, die das Trennelement 11 zumindest teilweise umgibt und die auf dem Trennelement 11 verfahrbar gelagert ist, wobei die Hülle 12 formstabil ausgebildet ist. Die Hülle 12 umfasst einen Betätiger 22 mit einem Magneten und einem Winkelelement, der auf der Hülle 12 angeordnet ist. Der Betätiger 22 ist durch ein Pneumatikventil/Linearmotor und einen weiteren Winkel (siehe Figur 1C) verriegelbar ausgebildet ist, so dass bei einem Verriegeln des Betätigers 22 die Hülle 12 auf dem Trennelement 11 entlang der dritten Förderoberfläche 8 ausfahrbar ist.

Die Hülle 12 und das Trennelement 11 werden mittels eines Führungselements 15 geführt, das an seinem in die erste Richtung 2 liegenden Endbereich 16 eine Abschrägung umfasst. Der in die zweite Richtung 4 liegende Endbereich 17 des Trennelements 11 und der in die zweite Richtung 4 liegende Endbereich 18 der Hülle 12 weisen ebenfalls jeweils eine Abschrägung auf.

Der in der ersten Richtung 2 liegende Endbereich 19 der Hülle 12 weist eine Stirnfläche 20 auf, die senkrecht zu der dritten Förderoberfläche 8 verläuft und mit der zweiten Richtung 4 einen Winkel bildet, so dass durch die dadurch ausgebildete Schräge Behälter von der dritten Förderoberfläche 8 zu der zweiten Förderoberfläche 9 verbracht, im Allgemeinen geschoben, werden können.

Der in der ersten Richtung 2 liegende Endbereich 21 des Trennelements 11 ist in der Figur 1A abgerundet ausgebildet. Es kann aber auch vorgesehen sein, dass dieser Endbereich analog zu dem in der ersten Richtung 2 liegenden Endbereich 19 der Hülle 12 ausgebildet ist.

In der Figur 1A besteht zwischen dem in der ersten Richtung 2 liegenden Endbereich 19 der Hülle 12 und der Überführungsvorrichtung 10 ein räumlicher Abstand, so dass in diesem Bereich noch bei einem Leerfahren der Förderspeichervorrichtung 1 noch Behälter vorhanden sein könnten.

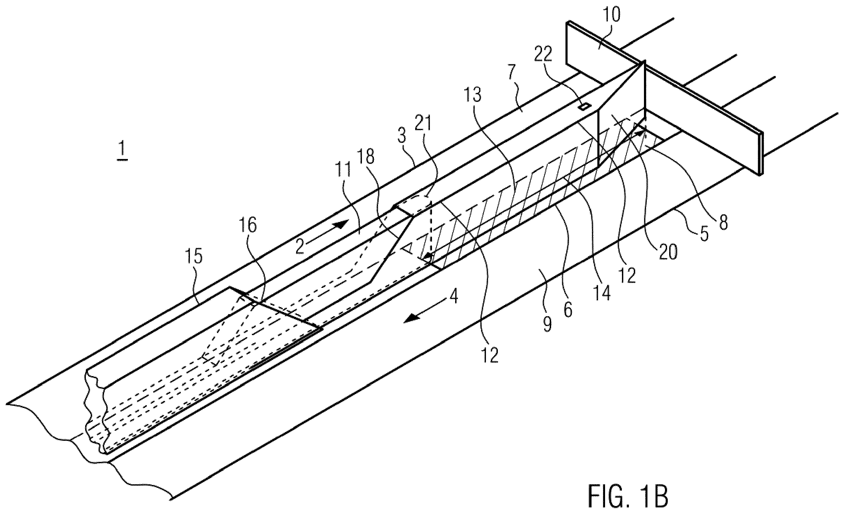

Um solche Behälter mittels der Hülle 12, insbesondere mittels der Stirnfläche 20, von der dritten Förderoberfläche 8 ganz oder teilweise auf die zweite Förderoberfläche 9 zu verbringen, so dass diese Behälter mittels des zweiten Förderers 5 in die zweite Richtung 4 transportiert werden können, wird wie in der Figur 1B dargestellt, der räumliche Abstand zwischen dem in der ersten Richtung 2 liegenden Endbereich 19 der Hülle 12 und der Überführungsvorrichtung 10 verkleinert.

In der Figur 1C sind exemplarisch ein Pneumatikzylinder 23 und ein Winkelelement 24, die auf einer Haltestruktur 25 angeordnet sind, dargestellt. Mittels der Pneumatikzylinders 23 ist das Winkelelement 24 auf- und abbewegbar.

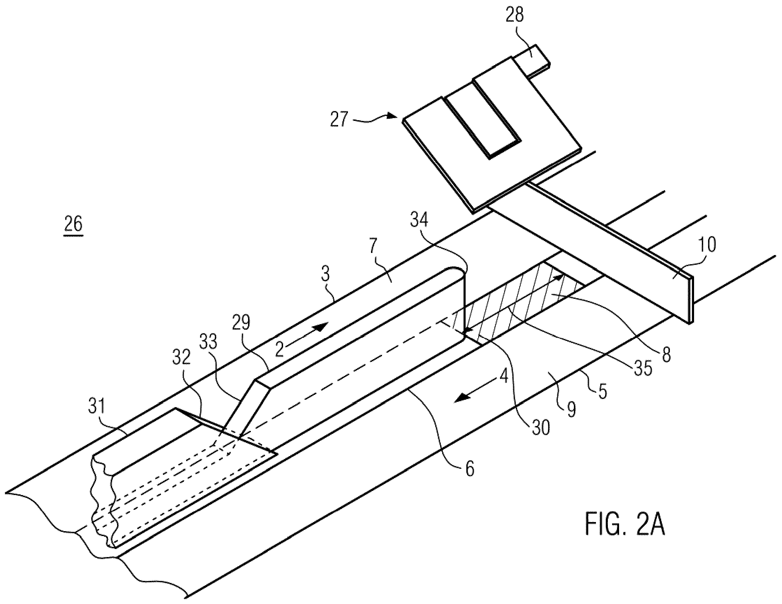

Figur 2A zeigt ein zweites Beispiel der Förderspeichervorrichtung 26 in einem ersten Betriebszustand. Das Zusatzelement 27 ist als ein Hebel 28 ausgebildet sein, der, wenn die Überführungsvorrichtung 10 und das Trennelement 29 in die Leerungsposition verbracht wurden, in den Durchgangsbereich 30 mit konstantem Abstand 35 einbringbar ist. Der Hebel 28 kann mittels eines Pneumatikzylinders ansteuerbar ausgebildet sein. Während eines Speicher- und Förderprozesses der Förderspeichervorrichtung 26 ist der Hebel 28 wie in Figur 2A dargestellt oberhalb dieser Vorrichtung 26 angeordnet, so dass er den Betrieb dieser Vorrichtung 26 nicht beeinflusst.

Das Trennelement 29 wird mittels eines Führungselements 31 geführt, das an seinem in die erste Richtung 2 liegenden Endbereich 32 eine Abschrägung umfasst. Der in die zweite Richtung 4 liegende Endbereich 33 des Trennelements 29 weist ebenfalls eine Abschrägung auf. Der in die erste Richtung 2 liegende Endbereich 34 des Trennelements 29 weist eine Abrundung auf.

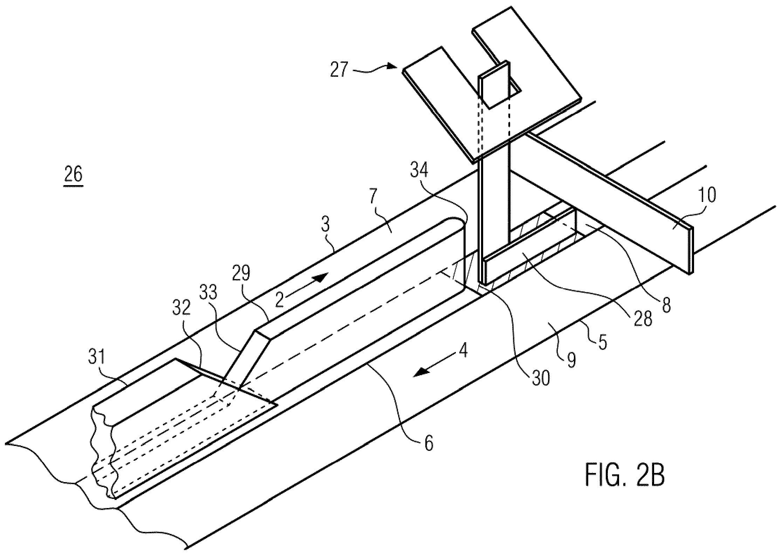

Figur 2B zeigt die Förderspeichervorrichtung 26 in einem zweiten Betriebszustand, in dem der Hebel 28 in den Durchgangsbereich 30 zwischen dem Trennelement 29 und der Überführungsvorrichtung 10 eingebracht wurde. Dadurch können Behälter in dem Durchgangsbereich 30 seitlich von der dritten Förderoberfläche 8 auf die zweite Förderoberfläche 9 verbracht werden.

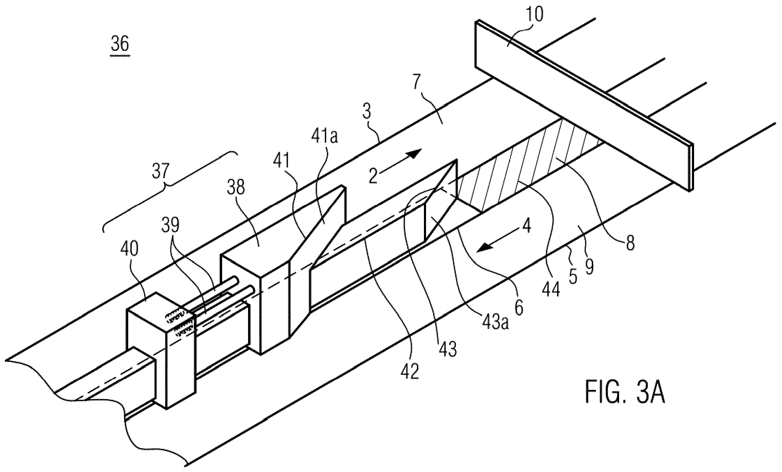

Figur 3A zeigt ein drittes Beispiel der Förderspeichervorrichtung 36 in einem ersten Betriebszustand. Das Zusatzelement 37 umfasst einen ersten Klotz 38, einen zweiten Klotz 40 und zwei Federn 39, wobei der erste Klotz 38 dazu ausgelegt ist, Behälter aus einem Durchgangsbereich 44 zu entfernen. Der erste Klotz 38 ist gefedert mittels der zwei Federn 39 mit dem zweiten Klotz 40 verbunden und ein in der ersten Richtung 2 liegender Endbereich 41 des ersten Klotzes 38 weist eine Stirnfläche 41a auf, die senkrecht zu der dritten Förderoberfläche 8 verläuft und mit der ersten Richtung 2 einen Winkel bildet. Der erste 38 und der zweite Klotz 40 weisen Durchgänge auf, durch die hindurch das Trennelement 42 verfahren werden kann. Der in der ersten Richtung 2 liegende Endbereich 43 des Trennelements 42 weist eine Stirnfläche 42a auf, die senkrecht zu der dritten Förderoberfläche 8 verläuft und mit der ersten Richtung 2 einen Winkel bildet.

Während eines Leerungsprozesses der Förderspeichervorrichtung 36 überragt, wie dargestellt, das Trennelement 42 in der ersten Richtung 2 gesehen das Zusatzelement 37, so dass mittels des ersten Klotzes 38 Behälter in dem Durchgangsbereich 44 von der dritten Förderoberfläche 8 auf die zweite Förderoberfläche 9 verbracht werden können.

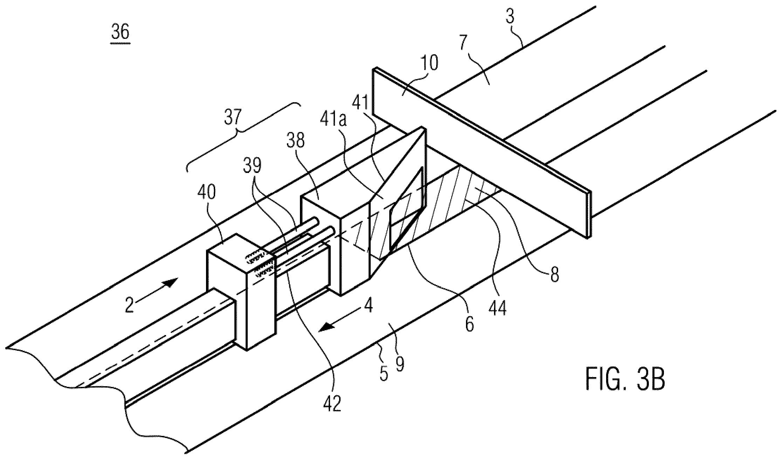

Figur 3B zeigt, dass bei einem Speicher- und Förderprozess der Förderspeichervorrichtung 36, das Trennelement 42 bezüglich des Zusatzelements 37 in die zweite Richtung 4 bewegt wurde.

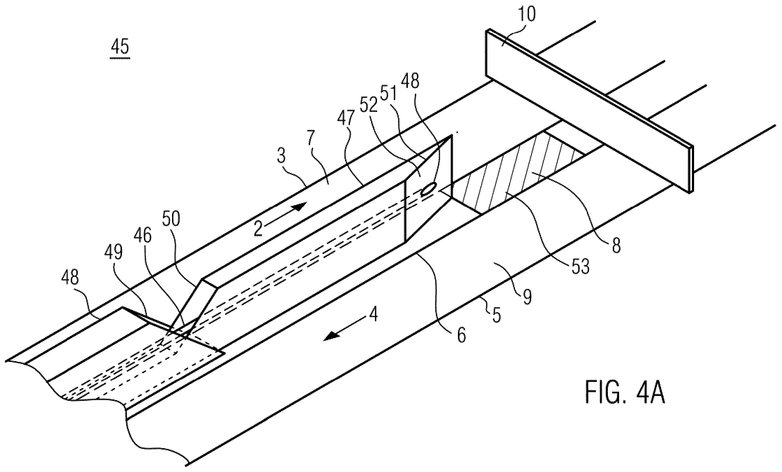

Figur 4A zeigt ein viertes Beispiel einer Förderspeichervorrichtung 45 in einem ersten Betriebszustand. Das Zusatzelement als eine Stange 46 ausgebildet. Das Trennelement 47 umfasst eine Durchgangsbohrung 48, in der die Stange 46 verfahrbar angeordnet ist, um für ein Entfernen von Behältern in dem Durchgangsbereich 53 in die erste Richtung 2 verfahren werden zu können. Das Trennelement 47 wird mittels eines Führungselements 48 geführt, das an seinem in die erste Richtung 2 liegenden Endbereich 49 eine Abschrägung umfasst. Der in die zweite Richtung 4 liegende Endbereich 50 des Trennelements 47 weist ebenfalls eine Abschrägung auf. Der in der ersten Richtung 2 liegende Endbereich 51 des Trennelements 47 weist eine Stirnfläche 52 auf, die senkrecht zu der dritten Förderoberfläche 8 verläuft und mit der zweiten Richtung 4 einen Winkel bildet, so dass durch die dadurch ausgebildete Schräge Behälter von der dritten Förderoberfläche 8 zu der zweiten Förderoberfläche 9 verbracht werden können.

Während eines Speicher- und Förderprozesse der Förderspeichervorrichtung 45 ist die Stange 46 derart in dem Trennelement 47 angeordnet, dass sie den in der ersten Richtung 2 liegenden Endbereich 51 des Trennelements 47 nicht überragt.

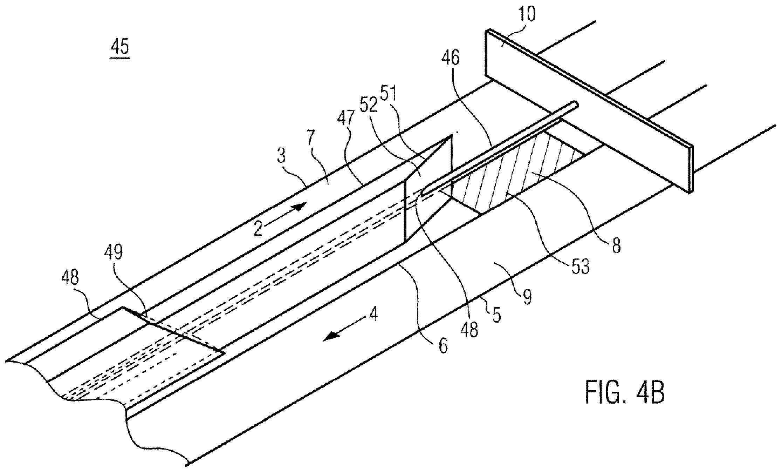

Figur 4B zeigt, wie bei einem Leerungsprozess die verriegelte Stange 46 durch ein Verfahren des Trennelements 47 in die zweite Richtung 4 die Stirnfläche 52 überragt und durch ein Verfahren der Überführungsvorrichtung 10 mittels der Stange 46 in dem Durchgangsbereich 53 vorhandene Behälter von der dritten Förderoberfläche 8 auf die zweite Förderoberfläche 9 überführt werden können.

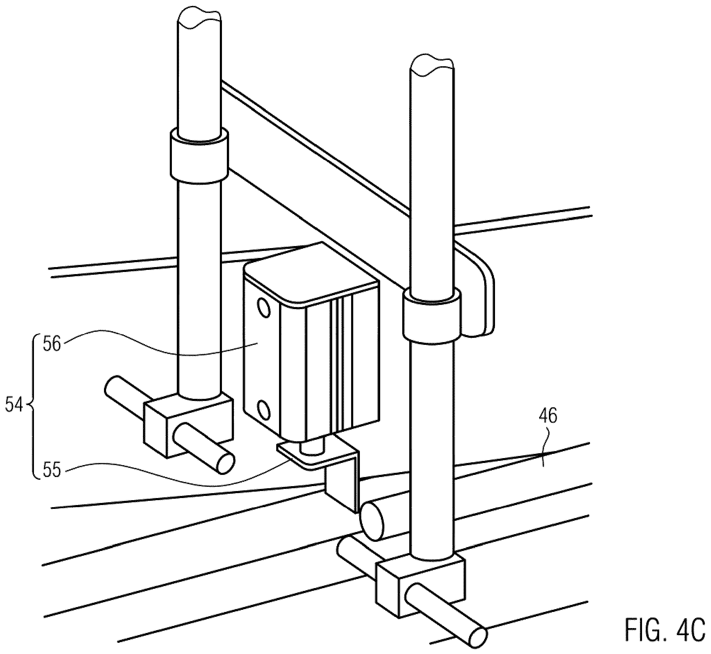

Figur 4C zeigt eine Halterung 54 der Stange 46, d.h. des Zusatzelements, die einen Pneumatikzylinder 56 und ein Winkelelement 55 umfasst. Mittels der Halterung 54 wird die Stange 46 gefedert gelagert und kann für ein Verfahren der Stange 46 verriegelt werden. Während eines Leerungsprozesses kann die Verriegelung formschlüssig erfolgen. Die Halterung 54 kann beispielsweise mittels eines Federblechs befestigt sein, um die Federung zu gewährleisten. Beispielsweise kann das Federblech oberhalb des Pneumatikzylinders 56 angeordnet sein.

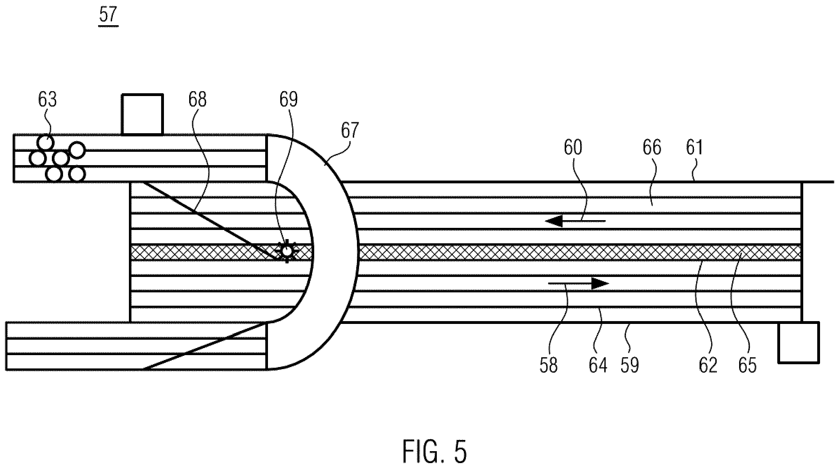

Figur 5 zeigt ein fünftes Beispiel der Förderspeichervorrichtung 57. Die Förderspeichervorrichtung 57 umfasst einen in eine erste Richtung 58 antreibbaren ersten Förderer 59 und einen in eine zweite Richtung 60 antreibbaren zweiten Förderer 61, wobei die erste Richtung 58 und die zweite Richtung 60 gegenläufig sind, und einen wahlweise in die erste 58 oder in die zweite Richtung 60 antreibbaren oder stillstehenden dritten Förderer 62, der zwischen dem ersten 59 und dem zweiten Förderer 61 angeordnet ist, wobei der erste 59, der zweite 61 und der dritte Förderer 62 derart parallel zueinander angeordnet sind, dass Behälter 63 von einer ersten Förderoberfläche 64 des ersten Förderers 59 zu einer dritten Förderoberfläche 65 des dritten Förderers 62 und von dort zu einer zweiten Förderoberfläche 66 des zweiten Förderers 61 überführbar sind. Bei dem Förderer 62 kann es sich in diesem Fall auch um eine einfache Platte handeln, die ortsfest (ohne an einen Antrieb angebunden zu sein) an einem Gestell der Förderspeichervorrichtung 57 angeordnet ist.

Zudem umfasst die Förderspeichervorrichtung 57 eine Überführungsvorrichtung 67 zum Überführen von Behältern 63 von der ersten 64 zu der dritten 65 und von dort zu der zweiten Förderoberfläche 66 und ein Trennelement 68 mit einem Zusatzelement 69. Die Behälter werden hier in einem Betriebsmodus von der Überführungsvorrichtung 67 überführt. Das Trennelement 68 ist als Geländer 68 und das Zusatzelement 69 als eine rotierende Bürste 69 ausgebildet. Auf das Trennelement 68 kann in diesem Fall auch verzichtet werden, wenn beispielsweise ein Staudruck auf die Behälter 63 vor der Förderspeichervorrichtung 57 bzw. am Anfang des ersten Förderers 59 gering oder nicht vorhanden ist.

Zumindest die Borsten der Bürste 69 sind hier zumindest teilweise aus einem elastischen Material ausgeführt und werden von den Behältern 68, welche in einem Leerfahrmodus auf dem dritten Förderer 62 auf die Bürste 69 von dem dritten Förderer 62 gefahren und/oder mittels der Überführungsvorrichtung 67 geschoben bzw. transportiert werden, umgebogen. Nachdem ein Behälter 63 die Bürste passiert hat, biegen sich die Borsten elastisch wieder zurück.

Die Bürste 69 kann feststehend oder rotierend ausgebildet sein. Die Rotation kann entweder durch einen mit der Bürste verbundenen Antrieb bewirkt werden oder über ein Getriebe, welches mit einem anderen Antrieb der Förderspeichervorrichtung 57, beispielsweise mit dem Antrieb der Überführungsvorrichtung 67, zusammenwirkt.

Behälter können mittels des Geländers von der der zweiten Förderoberfläche 66 zu einem weiteren Förderer am Auslauf der Förderspeichervorrichtung 57 (oben, wo die Behälter 63 dargestellt sind, geleitet werden. Um beim Leerfahren der Förderspeichervorrichtung 57 zurückbleibende Behälter und ein Einklemmen von Händen des Bedienpersonals zwischen Geländer 68 und Überführungsvorrichtung 67 zu vermeiden bzw. die Behälter 63 sicher auf den zweiten Förderer 61 zu transportieren, ist in dem Durchgangsbereich die rotierende Bürste 69 vorgesehen. Die Länge der Borsten der Bürste 69 ist vorzugsweise auf die zu verarbeiteten Behälter rmen Beispielen eins bis sieben umfasst diese Förderspeichervorrichtung 74 keinen driteten Behälter.

Der Gesamtdurchmesser bzw. eine Gesamterstreckung der Bürste 69 senkrecht zur Transportrichtung ist vorzugsweise größer als ein Drittel der Breite des Förderers 62 und kleiner als das Dreifache der Breite des Förderers 62.

Die Bürste 69 muss nicht zwingend eine zylindrische Form aufweisen, sondern kann auch keilförmig ausgebildet sein, wobei eine seitliche Fläche des Keils die Behälter 63 in Richtung auf den zweiten Förderer 61 drängt. (vergleichbar zur Fläche 52 in den vorherigen Figuren).

In dem in Figur 5 gezeigten Beispiel ist die rotierende Bürste 69 an dem Geländer 68 angeordnet.

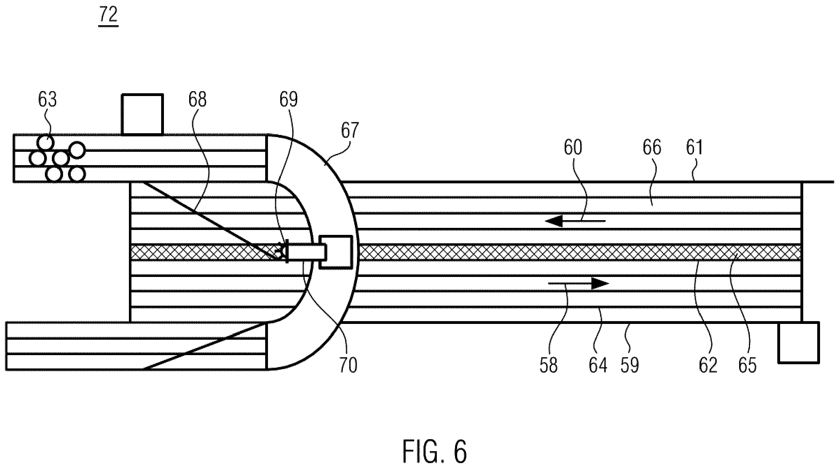

In dem in Figur 6 gezeigten Beispiel der Förderspeichervorrichtung 72 ist die, vorzugsweise rotierende, Bürste 69 mittels einer Halterung 70 mit der Überführungsvorrichtung 67 verbunden.

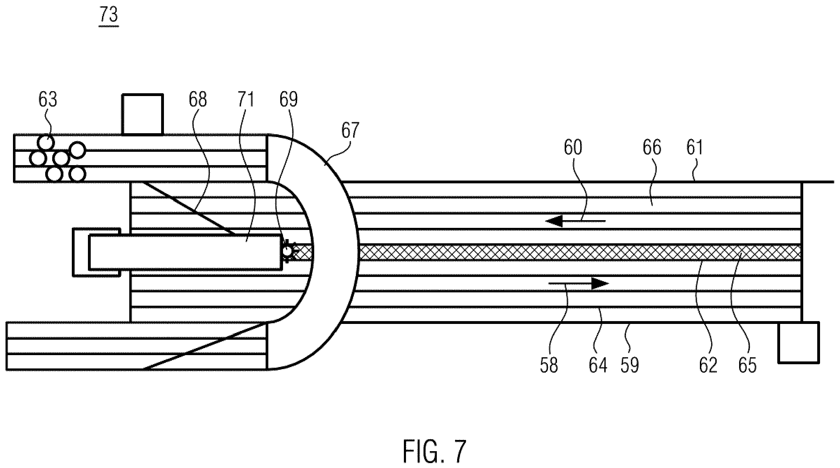

In dem in Figur 7 gezeigten Beispiel der Förderspeichervorrichtung 73 ist die rotierende Bürste 69 an einer Halterung 71 unabhängig von dem Geländer 68 und der Überführungsvorrichtung 67 angeordnet. Die Halterung kann auf einem Hallenboden angeordnet oder mit einem Gestell der Förderspeichervorrichtung 57 verbunden sein.

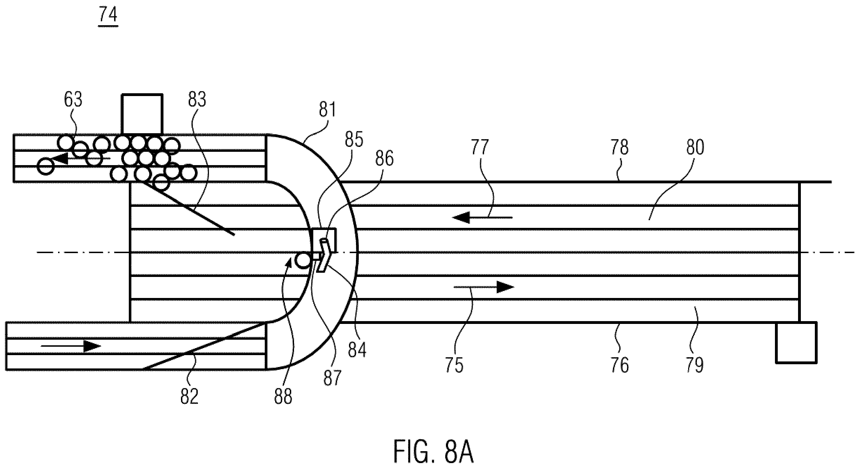

Figur 8A zeigt eine Ausführungsform der Förderspeichervorrichtung 74 in einem ersten Betriebszustand. Im Gegensatz zu den Beispielen eins bis sieben umfasst diese Förderspeichervorrichtung 74 keinen dritten Förderer. Die Förderspeichervorrichtung 74 umfasst einen in eine erste Richtung 75 antreibbaren ersten Förderer 76 und einen in eine zweite Richtung 77 antreibbaren zweiten Förderer 78, wobei die erste Richtung 75 und die zweite Richtung 77 gegenläufig sind, wobei der erste 76 und der zweite Förderer 78 derart parallel zueinander angeordnet sind, dass Behälter 63 von einer ersten Förderoberfläche 79 des ersten Förderers 76 zu einer zweiten Förderoberfläche 80 des zweiten Förderers 78 überführbar sind.

Zudem umfasst die Förderspeichervorrichtung 74 eine Überführungsvorrichtung 81 zum Überführen von Behältern 63 von der ersten 79 zu der zweiten Förderoberfläche 80, ein erstes Trennelement 82 und ein zweites Trennelement 83. Die Behälter werden hier in einem Betriebsmodus von der Überführungsvorrichtung 81 überführt. Das beiden Trennelemente 82, 83 können jeweils als Geländer oder dergleichen ausgebildet sein.

Behälter 63 können mittels des zweiten Trennelements 83 von der der zweiten Förderoberfläche 80 zu einem weiteren Förderer am Auslauf der Förderspeichervorrichtung 74 geleitet werden. Um beim Leerfahren während eines Leerungsprozesses der Förderspeichervorrichtung 74 zurückbleibende Behälter 63 zu vermeiden bzw. die Behälter 63 von dem ersten Förderer 76 sicher auf den zweiten Förderer 78 zu überführen, ist ein Überleitelement 84 (eine Ausführungsform des Zusatzelements) vorgesehen, das in einen Durchgangsbereich 88 einbringbar ist. Der Durchgangsbereich 88 besteht entlang eines Übergangsbereichs zwischen der ersten Förderoberfläche 79 und der zweiten Förderoberfläche 80 zwischen der Überführungsvorrichtung 81 und dem zweiten Trennelement 83.

Das Überleitelement 84 wird von einem Antrieb 85 angetrieben mit dem es durch eine Verbindungswelle 86 verbunden ist. Zudem ist ein Sensor 87 vorgesehen für eine Detektion einer Anwesenheit von einem oder mehreren Behältern 63 in dem Durchgangsbereich 88, wobei der Sensor 87 dazu ausgelegt sein kann, einen Auslösemechanismus des Überleitelements 84 auszulösen, wenn ein oder mehrere Behälter 63 detektiert werden.

Der Antrieb 85 mit der Verbindungswelle 86, dem Überleitelement 84 und dem Sensor 87 sind an der Überführungsvorrichtung 81 benachbart zu dem Durchgangsbereich 88 angeordnet. Bei einem Auslösen des Überleitelements 84 schwenkt dieses in dem Durchgangsbereich 88, kann dabei einen Behälter, beispielsweise an seiner Mantelfläche, kontaktieren und während des Schwenkens auf den zweiten Förderer 78 verbringen. Nach Erreichen einer Endposition des Schwenkens kann das Überleitelement 84 wieder in seine Ausgangsposition zurückgeschwenkt werden.

Figur 8A zeigt die Förderspeichervorrichtung 74 in einem Leerungsprozess, bei dem nur ein Behälter auf dem ersten Förderer 76 verblieben ist. Dieser kann mittels des Sensors 87 detektiert werden.

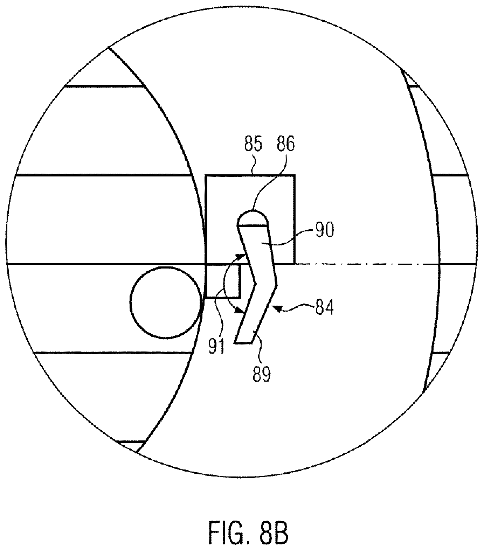

Figur 8B zeigt in einer Ausschnittsvergrößerung der Fig. 8A das Überleitelement 84. Das Überleitelement 84 setzt sich dabei aus einer ersten Einheit 89 und einer zweiten Einheit 90 zusammen, wobei die beiden Einheiten 89, 90 einen Winkel von etwa 130° einschließen.

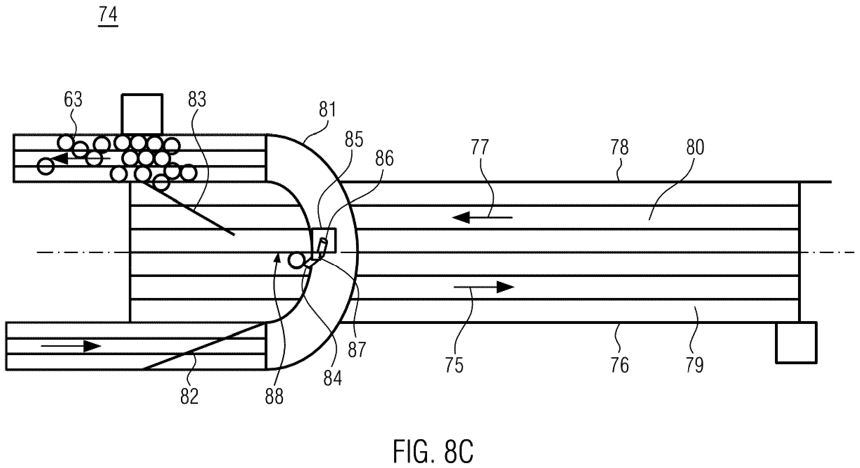

Figur 8C zeigt die Förderspeichervorrichtung 74 von Fig. 8A in einem zweiten Betriebszustand, in dem das Überleitelement 84 aus der Ausgangsposition bereits ein Stück verschwenkt wurde und den auf dem ersten Förderer verbliebenen Behälter von dem ersten Förderer ein Stück zu dem zweiten Förderer verbracht hat.

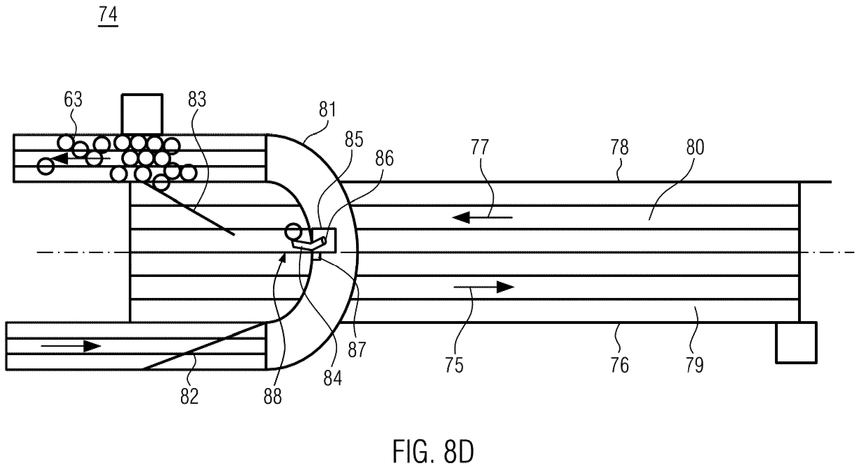

Figur 8D zeigt die Förderspeichervorrichtung 74 von Fig. 8A in einem dritten Betriebszustand, in dem das Überleitelement 84 weiter bis in eine Endposition verschwenkt wurde und den verbliebenen Behälter nun ganz zu dem zweiten Förderer verbracht hat.

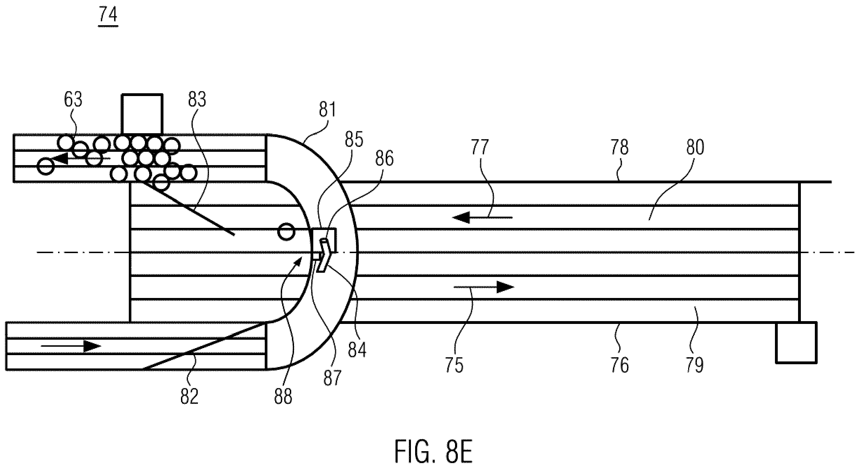

Figur 8E zeigt die Förderspeichervorrichtung 74 von Fig. 8A in einem vierten Betriebszustand, in dem das Überleitelement 84 wieder in die Ausgangsposition verschwenkt wurde.

## Patentansprüche

1. Förderspeichervorrichtung (74) für Behälter (63), wie Flaschen oder Dosen, umfassend:
- einen in eine erste Richtung (75) antreibbaren ersten Förderer (76),
- einen in eine zweite Richtung (77) antreibbaren zweiten Förderer (78), wobei die erste Richtung (75) und die zweite Richtung (77) gegenläufig sind, wobei der erste Förderer (76) und der zweite Förderer (78) derart parallel zueinander angeordnet sind, dass Behälter (63) von einer ersten Förderoberfläche (79) des ersten Förderers (76) zu einer zweiten Förderoberfläche (80) des zweiten Förderers (78) überführbar sind,
- eine Überführungsvorrichtung (81) zum Überführen von Behältern (63) von der ersten Förderoberfläche (79) zu der zweiten Förderoberfläche (80),
- ein Zusatzelement (84),
- ein Trennelement (83),
wobei entlang eines Übergangbereichs zwischen der ersten Förderoberfläche (79) und der zweiten Förderoberfläche (80) zwischen der Überführungsvorrichtung (81) und dem Trennelement (83) ein Durchgangsbereich (88) besteht, wobei die Überführungsvorrichtung (81) während eines Leerungsprozesses der Förderspeichervorrichtung (74) in eine Leerungsposition verbringbar ist
wobei das Zusatzelement (84) derart ausgebildet ist, dass es während des Leerungsprozesses relativbeweglich gegenüber der Überführungsvorrichtung (81) ist,
das Zusatzelement (84) während des Leerungsprozesses in den Durchgangsbereich (88) einbringbar ist und dazu ausgelegt ist, Behälter (63) zu dem zweiten Förderer (78) zu verbringen,
und
das Zusatzelement (84) als ein Überleitelement (84) ausgebildet ist, wobei das Überleitelement (84) ausgebildet ist, Behälter von dem ersten Förderer (76) zu dem zweiten Förderer (78) zu verbringen, **dadurch gekennzeichnet, dass**
das Überleitelement (84) ausgebildet ist, wenn bei dem Leerungsprozess ein letzter Behälter auf dem ersten Förderer (76) in dem Durchgangsbereich (88) angeordnet ist, aktiviert zu werden, zur Seite zu schwenken, dabei den letzten Behälter zu kontaktieren und auf den zweiten Förderer (78) zu schieben, wobei das Überleitelement (84) ausgebildet ist, danach wieder in eine Ausgangsposition zurückschwenken.

2. Förderspeichervorrichtung (74) nach Anspruch 1, wobei das Überleitelement (84) eine gekrümmte Oberfläche aufweist oder wobei das Überleitelement (84) mindestens zwei in einem Winkel (91) von 120° bis 180° zusammengesetzte Einheiten (89, 90) umfasst.

3. Förderspeichervorrichtung (74) nach Anspruch 1 oder 2, weiter umfassend einen Antrieb (85) für das Überleitelement (84), wobei vorzugsweise eine Verbindungswelle (86) vorgesehen ist, die den Antrieb (85) und das Überleitelement (84) verbindet, wobei vorzugsweise ein Sensor (87) vorgesehen ist für eine Detektion einer Anwesenheit von einem oder mehreren Behältern (63) in dem Durchgangsbereich (88), wobei der Sensor (87) vorzugsweise ausgelegt ist, einen Auslösemechanismus des Überleitelements (84) auszulösen, wenn ein oder mehrere Behälter (63) detektiert werden.

4. Förderspeichervorrichtung nach einem der Ansprüche 1 bis 3, wobei das Überleitelement (84) an der Überführungsvorrichtung (81) angeordnet ist, wobei vorzugsweise der Antrieb (85), die Verbindungswelle (86) und der Sensor (87) an der Überführungsvorrichtung (81) angeordnet sind.

5. Förderspeichervorrichtung nach einem der Ansprüche 1 bis 4, wobei das Überleitelement (84) fingerartig ausgebildet ist.

6. Verfahren zum Betreiben einer Förderspeichervorrichtung (74) nach einem der Ansprüche 1 bis 5 während eines Leerungsprozesses, umfassend die folgenden Schritte:
- Antreiben des ersten Förderers (76) in die erste Richtung (75),
- Antreiben des zweiten Förderers (78) in die zweite Richtung (77),
- Verbringen der Überführungsvorrichtung (81) in die Leerungsposition durch Verfahren in die zweite Richtung (77),
während des Leerungsprozesses, Detektieren von auf den ersten Förderer (76) verbliebener Behälter (63) und Aktivieren des Zusatzelements (84), um die verbliebenen Behälter (63) von dem ersten Förderer (76) auf den zweiten Förderer (78) zu verbringen.

## Claims

1. Conveying storage device (74) for containers (63), such as bottles or cans, comprising:
- a first conveyor (76) which is drivable in a first direction (75),
- a second conveyor (78) which is drivable in a second direction (77), wherein the first direction (75) and the second direction (77) are opposite to each other, wherein the first conveyor (76) and the second conveyor (78) are arranged parallel to each other such that containers (63) are transferable from a first conveying surface (79) of the first conveyor (76) to a second conveying surface (80) of the second conveyor (78),
- a transfer device (81) for transferring containers (63) from the first conveying surface (79) to the second conveying surface (80),
- an additional element (84),
- a separating element (83),
wherein a passage region (88) exists along a transition region between the first conveying surface (79) and the second conveying surface (80) between the transfer device (81) and the separating element (83), wherein the transfer device (81) is movable into an emptying position during an emptying process of the conveying storage device (74),
wherein the additional element (84) is adapted to be relatively movable in relation to the transfer device (81) during the emptying process,
the additional element (84) is introducible into the passage region (88) during the emptying process and is adapted to transfer containers (63) to the second conveyor (78), and
the additional element (84) is configured as a transfer element (84), wherein the transfer element (84)is configured to transfer containers from the first conveyor (76) to the second conveyor (78),
characetrised in that
the transfer element (84) is configured, when, during the emptying process, a last container is placed on the first conveyor (76) in the passage region (88), the transfer element is activated, pivoted to the side, thereby contacting the last container and pushing it onto the second conveyor (78), wherein the transfer element (84) is configured to then pivot back to an initial position.

2. Conveying device (74) according to claim 1, wherein the transfer element (84) has a curved surface or wherein the transfer element (84) comprises at least two units (89, 90) assembled at an angle (91) of 120° to 180°.

3. Conveying device (74) according to claim 1 or 2, further comprising a drive (85) for the transfer element (84), wherein preferably a connecting shaft (86) is provided which connects the drive (85) and the transfer element (84), wherein preferably a sensor (87) is provided for a detection of a presence of one or more containers (63) in the passage region (88), wherein the sensor (87) is preferably adapted to trigger a trigger mechanism of the transfer element (84) when one or more containers (63) are detected.

4. Conveying device according to one of claims 1 to 3, wherein the transfer element (84) is arranged on the transfer device (81), wherein preferably the drive (85), the connection shaft (86), and the sensor (87) are arranged on the transfer device (81).

5. Conveying device according to one of claims 1 to 4, wherein the transition element (84) is configured finger-like.

6. Method of operating a conveying storage device (74) according to one of claims 1 to 5 during an emptying process, comprising the following steps:
- driving the first conveyor (76) in the first direction (75),
- driving the second conveyor (78) in the second direction (77),
- moving the transfer device (81) to the emptying position by moving it in the second direction (77),
during the emptying process, detecting containers remaining on the first conveyor (76) and activating the additional element (84) to transfer the remaining containers (63) from the first conveyor (76) onto the second conveyor (78).

## Revendications

1. Dispositif de stockage pour convoyeur (74) destiné à des récipients (63), tels que des bouteilles ou des boîtes, comprenant :
- un premier convoyeur (76) pouvant être entraîné dans une première direction (75),
- un second convoyeur (78) pouvant être entraîné dans une seconde direction (77), dans lequel la première direction (75) et la seconde direction (77) sont opposées, dans lequel le premier convoyeur (76) et le second convoyeur (78) sont agencés parallèlement l'un à l'autre de telle manière que des récipients (63) peuvent être transférés d'une première surface de convoyage (79) du premier convoyeur (76) vers une seconde surface de convoyage (80) du second convoyeur (78),
- un dispositif de transfert (81) permettant de transférer des récipients (63) de la première surface de convoyage (79) vers la seconde surface de convoyage (80),
un élément d'addition (84),
un élément de séparation (83),
dans lequel il existe une région de passage (88) entre le dispositif de transfert (81) et l'élément de séparation (83) le long d'une région de transition entre la première surface de convoyage (79) et la seconde surface de convoyage (80), dans lequel le dispositif de transfert (81) peut être amené dans une position de vidage pendant une opération de vidage du dispositif de stockage pour convoyeur (74),
dans lequel
l'élément d'addition (84) est conçu de manière à être relativement mobile par rapport au dispositif de transfert (81) pendant l'opération de vidage,
l'élément d'addition (84) peut être inséré dans la région de passage (88) pendant l'opération de vidage et est conçu pour faire passer le récipient (63) vers le second convoyeur (78), et
l'élément d'addition (84) est conçu sous la forme d'un élément d'aiguillage (84), dans lequel l'élément d'aiguillage (84) est conçu pour faire passer des récipients du premier convoyeur (76) au second convoyeur (78), **caractérisé en ce que** l'élément d'aiguillage (84) est conçu pour, lorsqu'un dernier récipient est agencé dans la région de passage (88) sur le premier convoyeur (76), être activé pendant l'opération de vidage, pivoter sur le côté, venir en contact avec le dernier récipient et le pousser sur le second convoyeur (78), dans lequel l'élément d'aiguillage (84) est conçu pour revenir ensuite dans une position de départ.

2. Dispositif de stockage pour convoyeur (74) selon la revendication 1, dans lequel l'élément d'aiguillage (84) présente une surface incurvée ou dans lequel l'élément d'aiguillage (84) comprend au moins deux unités (89, 90) assemblées selon un angle (91) compris entre 120° et 180°.

3. Dispositif de stockage pour convoyeur (74) selon la revendication 1 ou 2, comprenant en outre un entraînement (85) destiné à l'élément d'aiguillage (84), dans lequel un arbre de liaison (86) reliant l'entraînement (85) et l'élément d'aiguillage (84) est de manière préférée prévu, dans lequel un capteur (87) permettant de détecter une présence d'un ou plusieurs récipient(s) (63) dans la région de passage (88) est de manière préférée prévu, dans lequel le capteur (87) est de manière préférée conçu pour déclencher un mécanisme de déclenchement de l'élément d'aiguillage (84) lorsqu'un ou plusieurs récipient(s) (63) sont détectés.

4. Dispositif de stockage pour convoyeur selon l'une quelconque des revendications 1 à 3, dans lequel l'élément d'aiguillage (84) est agencé au niveau du dispositif de transfert (81), dans lequel l'entraînement (85), l'arbre de liaison (86) et le capteur (87) sont de manière préférée agencés au niveau du dispositif de transfert (81).

5. Dispositif de stockage pour convoyeur selon l'une quelconque des revendications 1 à 4, dans lequel l'élément d'aiguillage (84) est conçu à la manière d'un doigt.

6. Procédé d'exploitation d'un dispositif de stockage pour convoyeur selon l'une quelconque des revendications 1 à 5, comprenant les étapes ci-dessous consistant à:
- entraîner le premier convoyeur (76) dans la première direction (75),
- entraîner le second convoyeur (78) dans la seconde direction (77),
- faire passer le dispositif de transfert (81) dans la position de vidage grâce à un déplacement dans la seconde direction (77),
pendant l'opération de vidage, détecter le récipient (63) restant sur le premier convoyeur (76) et activer l'élément d'addition (84) afin de faire passer les récipients (63) restants du premier convoyeur (76) au second convoyeur (78).
